# EUROPEAN PATENT SPECIFICATION

(11) **EP 0 517 949 B1**
(45) Date of publication and mention of the grant of the patent: **28.12.1994**
(21) Application number: 91113042.5
(22) Date of filing: 02.08.1991
(51) Int. Cl.: B29C 45/23

(54) **Nozzle for an injection moulding machine**
Düse für eine Spritzgussmaschine
Buse pour une presse à injection

(30) Priority: 08.06.1991 CN 91103816
(43) Date of publication of application: 16.12.1992
(73) Proprietor: Tse, Kwai Sum, Tsuen Wan, New Territories (HK)
(72) Inventor: Tse, Kwai Sum, Tsuen Wan, New Territories (HK)
(74) Representative: Finck, Dieter, Dr.Ing.

(56) References cited:
- US-A- 3 491 408
- US-A- 4 043 726

## Description

This invention relates to a nozzle for an injection moulding machine, and in particular, to an anti-backflow and anti-leakage nozzle for an injection moulding machine.

In an injection moulding process, plastics are molten and injected into a heated mould through a nozzle cooperating with the same. Generally, the molten plastic materials are forced through the nozzle by a rotable auger housed in a barrel, which is operated under hydraulic pressure. When sufficient materials have been injected into the mould, a seal provided by different structures is formed against the auger, to stop the moulding process. A common problem existing with such devices is that too large a volume of excess molten material is left between the mould and the sealing point, which in turn causes distortion of the moulded products.

To cope with this problem, the supply of the molten material is to be shut off at a point as close as possible to the entry to the mould. Though there had been many devices intending to solve the said problem, they were either too complicated or not so effective.

Such an injection nozzle, see e.g. US-A-3491408, was suggested comprising a spring-biased valve member having a conical head at the front end. A frusto-conical valve surface is formed at the rear of said conical head. Said frusto-conical valve surface cooperates with an annular valve seat. The conical head is surrounded by a nozzle tip having a conical inside wall. An outlet opening cooperating with a mould is provided in the top of said nozzle tip. Because there is only a narrow gap between said conical inside wall of said nozzle tip and said conical head of said valve member, only a small amount of molten material is left in said gap after injection has stopped. Therefore, distortion of the moulded products was largely decreased.

Nevertheless, since there is still a gap, small as it is, between the outlet opening and the sealing point, backflow and leakage of the molten materials will still occur, which makes it impossible to completely solve the old problem of product distortion due to shrinkage, deformation, and the like.

It is, therefore, the object of the invention to provide an injection nozzle which sealing point is right at the outlet opening cooperating with a mould, which provides both anti-backflow and anti-leakage functions and as a built-up type facilitates assembling and change of parts.

This object is achieved by an injection nozzle for an injection moulding machine, particularly by a built-up anti-backflow and anti-leakage injection nozzle, comprising a structural nut, a valve casing and a nozzle tip which are screwed together into one structural member, the valve casing, which is of a hollow structure, housing a compressed biasing spring which acts towards one side - the nut side - on an anti-backflow valve as a first sealing point and towards the opposite side - the tip side - on an anti-leakage valve as a second sealing point, such that moving of the molten plastic materials is controlled by the two respective sealing points.

During injection, the high-pressure molten materials force open the above-mentioned two sealings simultaneously. When injection has stopped, biased by the spring, the two sealing points are sealed simultaneously. In this manner, both backflow and leakage of the molten materials can be well prevented, and the quality of the moulded products can be greatly increased.

Preferably said nut comprises a coaxially formed passage in its nut side portion, which extends towards the tip side into a first molten material chamber.The first molten material chamber includes on its nut side a valve seat forming the first sealing point, and opens into a cylindrical coaxial bore on the tip side, which bore is threaded to cooperate with the said valve casing.

Advantageously said biasing spring installed in said valve casing rests on the nut side on a first seat which in turn acts on the anti-backflow valve. The anti-backflow valve slidably extends through a central bore of a bolt member, which is screwed into a threaded bore in the nut side portion of the valve casing and fixed. Further, the anti-backflow valve has a conical head on the nut side, which acts upon said valve seat to form the first sealing point. The valve casing has at least one through-hole arranged concentrically in the axial direction inside said valve casing.

Conveniently four through-holes are provided in said valve casing.

The bolt member may be fixed by a stud screw.

Preferably said biasing spring extends towards the tip side and rests upon a second seat which in turn pushes against the anti-leakage valve extending out from a central bore formed in the tip side portion of said valve casing. The anti-leakage valve forms a frusto-conical tip side end, which cooperates with an outlet opening of said nozzle tip, said opening leading into an injection hole. A second molten material chamber is provided between said anti-leakage valve and said nozzle tip. In this second molten material chamber the through-hole(s) open(s). The nozzle tip is screwed into a central threaded hole in the nut side end of said valve casing.

Between said passage of said structural nut and said molten material chamber a filter device may be provided.

Further a central slot may be formed vertically on the nut side of said first seat. In this case the bolt member has on its tip side a corresponding protruding structure to be received in said central slot.

Usually said valve casing has four radially extending openings around its circumference which connect the hollow structure of said valve casing to the outside.

It is convenient that said biasing spring is made of a chrome-vanadium alloy.

According to the invention the only one biasing spring performs two different functions simultaneously, i.e. anti-backflow and anti-leakage. Test production has shown that products made with the device according to the invention are of a very, very uniform density and completely free from any defects caused by, for instance, shrinkage, deformation, etc., that usually occur when products are moulded with prior art device.

Because of the only one spring exhibiting two functions there is no need of a hydraulic system or an oil pressure system. By using the injection nozzle according to the invention uniform density of products is ensured, since shrinkage is minimized, especially where a product has a large surface, where a thick wall is adjacent to a thin wall, or where there is a rib or a column. At such places, there is no ensuring of uniform density of the moulded products, when a device of the prior art is used.

Further filiform drawing of molten materials between the injection hole and the mould after injection stops can be thoroughly eliminated, since there is no material left at the injection hole due to the sealing of the anti-leakage valve. Leakage of molten materials is also effectively prevented due to the same reason.

With a prior art device the moulding machine is generally designed to include a retreating step, i.e. to retreat the auger backward, after injection stops, by 10 mm or so, so as to prevent the above-mentioned filiform drawing. However, shrinkage will still occur which leads to either depresssion or a rough surface or other deformations.

With the injection nozzle according to the invention, the retreating step can be dispensed with, since the only one spring simultaneously provides two functions. Finally, the injection nozzle according to the invention can easily be made to be installed onto moulding machines of all kinds.

With reference to the accompanying drawings an embodiment of the invention is described, wherein
- Fig. 1: is a front sectional view along A-A of Fig. 2 of the injection nozzle being not in operation,
- Fig. 2: is a sectional view of the injection nozzle along B-B of Fig. 1 not illustrating the spring,
- Fig. 3: is an end view of the nozzle tip of the injection nozzle, and

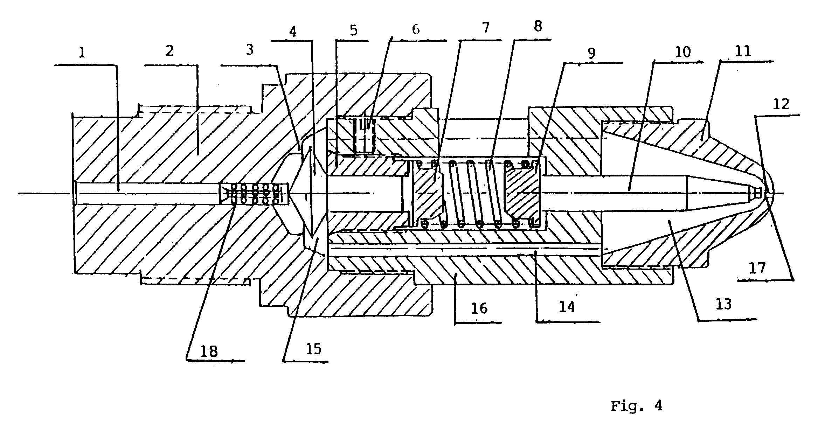

- Fig. 4: is a front sectional view as Fig. 1 showing the injection nozzle during injection.

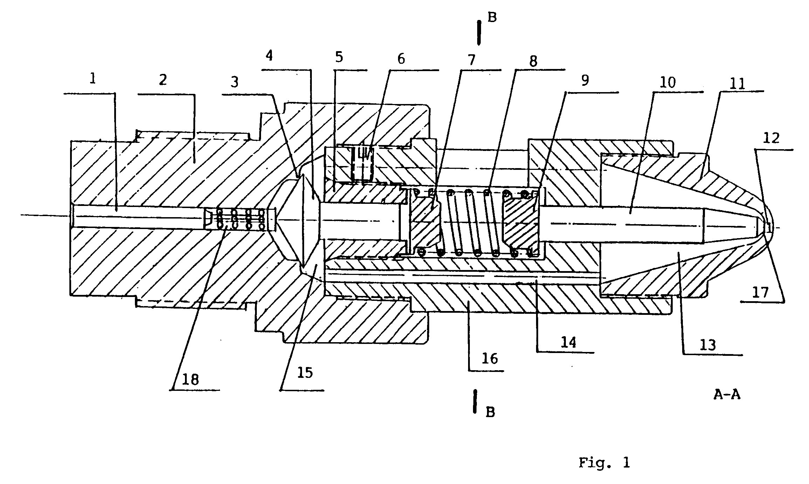

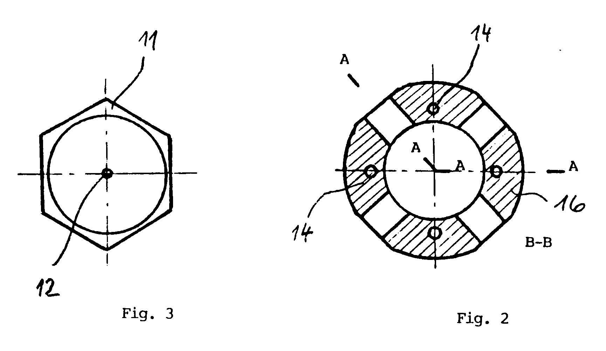

The built-up anti-backflow and anti-leakage injection nozzle shown in Fig. 1 and 2 comprises a structural nut 2, a valve casing 16 and a nozzle tip 11. The nut 2, the valve casing 16 and the nozzle tip 11 are screwed together into one structural member. The nut 2 comprises a coaxially formed passage 1 extending through its portion opposite to the nozzle tip 11 through which passage 1 molten materials pressed in from a barrel (not shown) are passed. The passage 1 extends on its tip side (right side in the drawing) into a first molten material chamber 15. The first molten material chamber 15 comprises a valve seat 3 as a first sealing point and a cylindrical coaxial bore on the tip side which is threaded to cooperate with the valve casing 16. The valve casing 16 is of a hollow structure for installing therein a biasing coil spring 8. On the nut side (left side in the drawing) the biasing helical spring 8 rests upon a first seat 7 which in turn acts on an anti-backflow valve 4. The anti-backflow valve 4 slidably extends through a central bore of a bolt member 5 which is screwed into a threaded bore in the nut side portion of the valve casing 16 and is fixed by a screw 6. The anti-backflow valve 4 has a conical head on the nut side which acts upon the valve seat 3 to form the first sealing point. The biasing spring 8 extends axially in direction towards the nozzle tip 11 and rests upon a second seat 9 which in turn pushes against an anti-leakage valve 10 having a stem extending out from a central bore formed in the tip side portion of the valve casing 16. The tip side end of the stem of the anti-leakage valve 10 which is of a frusto-conical shape cooperates with an outlet opening 17 of the nozzle tip 11. The outlet opening 17 leads into an injection hole 12, thus forming a second sealing point. Arranged concentrically in the axial direction inside the valve casing 16 are four through-holes 14, which open on their tip side into a second molten material chamber 13 between the stem of the anti-leakage valve 10 and the nozzle tip 11. The molten plastic materials move under pressure from the first molten material chamber 15 into the through-holes 14, and then further into the second molten material chamber 13, before they reach the second sealing point. The nozzle tip 11 is screwed into a threaded bore formed in the tip side portion of the valve casing 16.

As the molten materials may contain solid particles, between said passage 1 and the first molten material chamber 15 a filter device 18 is provided to remove the impurities.

On the nut side of the first seat 7, a central slot is formed vertically which receives a corresponding protruding structure formed on the tip side of the bolt member 5, which protruding structure is broken by the central bore in the bolt member 5.

Around the circumference of the valve casing 16, four radially extending openings are formed so that the inside of the hollow structure of the valve casing 16 is opened into the outside.

The biasing spring 8 is made of a chrome-vanadium alloy, to ensure its elastic characteristics.

When no injection is performed, the conical head of said anti-backflow valve 4 is pushed by means of the biasing spring 8 to the nut side upon the valve seat 3, to seal the first sealing point. At the same time, the frusto-conical end of the stem of the anti-leakage valve 10 is pushed against the outlet opening 17 to seal the second sealing point as shown in Fig. 1.

When high-pressure molten materials are pressed from a barrel through the passage 1 of the structural nut 2, they first pass through the filter device 18, so that certain impurities are filtered out. Then they flow into an expanded portion on the nut side of the first molten material chamber 15 and press upon the conical head of the anti-backflow valve 4 to push it open. Further, the molten materials move into the first molten material chamber 15, and still further into the second molten material chamber 13 through the through-holes 14 in the valve casing 16. Since the molten materials are highly pressurized, after filling said second molten material chamber 13, they act upon the conical surfaces of said anti-leakage valve 10 to move it to the nut side so that the outlet opening 17 is opened and the molten materials are injected into a mould (not shown) through the injection hole 12. This condition is shown in Fig. 2.

When the mould is completely filled and injection stops due to a decrease of the pressure of the molten materials, biasing of the spring 8 will make the anti-backflow valve 4 and the anti-leakage valve 10 move towards the nut side and the tip side, respectively, until the first and second sealings are all tightly sealed. In this manner, neither backflow nor leakage of the materials will occur (Fig. 1).

Around the outside of the first and second molten material chambers 15 and 13, there are provided electric heaters to keep the materials therein in a molten status. Four radially extending openings around the circumference of the valve casing 16 are meant for heat dissipation and also for permitting little amount of molten materials to flow out.

As mentioned before, on the nut side end of the first seat 7 a vertical slot is provided, while on the tip side end of the bolt member 5 a corresponding protruding structure is present. These parts help to facilitate assembling the biasing element. For assembling the second seat 9 and the biasing spring 8 are put into the hollow structure of the valve casing 16. Further, the first seat 7 and the bolt member 5 are put in, so that the protruding structure on the tip side end of the bolt member 5 is properly received in the vertical slot formed on the nut side end of the first seat 7. Then the bolt member 5 is turned to compress or bias the spring 8. After a few turns have been made by hand, a special key is used to further turn the bolt member 5. The special key has a hexagonal head on the one side, and its opposite end is formed flat just to be inserted into the vertical slot of the first seat 7. In this manner, a wrench can be used to tighten. When the spring 8 has been duly compressed and biased the screw 6 is tightened to fix the bolt member 5.

## Claims

1. Injection nozzle for an injection moulding machine, particularly a built-up anti-backflow and anti-leakage injection nozzle, comprising a structural nut (2), a valve casing (16) and a nozzle tip (11) which are screwed together into one structural member, the valve casing (16) which is of a hollow structure, housing a compressed biasing spring (8) which acts towards one side - the nut side - on an anti-backflow valve (4) as a first sealing point and towards the opposite side - the tip side - on an anti-leakage valve (10) as a second sealing point, such that moving of the molten plastic materials is controlled by the two respective sealing points (3, 12).

2. Injection nozzle according to claim 1 wherein said nut (2) comprises a coaxially formed passage (1) in its nut side portion, which extends towards the tip side into a first molten material chamber (15), and wherein said first molten material chamber (15) includes on its nut side a valve seat (3) forming the first sealing point, and opens into a cylindrical coaxial bore on the tip side, which bore is threaded to cooperate with said valve casing (16).

3. Injection nozzle according to claim 1 or 2 wherein the biasing spring (8) installed in said valve casing (16) rests on the nut side on a first seat (7) which in turn acts on the anti-backflow valve (4), said anti-backflow valve (4) slidably extending through a central bore of a bolt member (5), which is screwed into a threaded bore in the nut side portion of the valve casing (16) and fixed, and said anti-backflow valve (4) having a conical head on the nut side which acts upon said valve seat (3) to form the first sealing point, and wherein said valve casing (16) has at least one through-hole (14) arranged concentrically in the axial direction inside said valve casing (16).

4. Injection nozzle according to claim 3, wherein four through-holes (14) are provided in said valve casing (16).

5. Injection nozzle according to one of the claims 1 to 4 wherein said biasing spring (8) extends towards the tip side and rests upon a second seat (9), which in turn pushes against the anti-leakage valve (10) extending out from a central bore formed in the tip side portion of said valve casing (16), wherein said anti-leakage valve (10) forms a frusto-conical tip side end, which cooperates with an outlet opening (17) of said nozzle tip (11), said opening (17) leading into an injection hole (12), and wherein a second chamber (13) is provided between said anti-leakage valve (10) and said nozzle tip (11), in which second chamber (13) the through-hole(s) (14) open(s) and which nozzle tip (11) is screwed into a central threaded hole in the nut side end of said valve casing (16).

6. Injection nozzle according to one of the claims 1 to 5, wherein a filter device (18) is provided between said passage (1) of said structural nut (2) and said molten material chamber (15).

7. Injection nozzle according to one of the claims 1 to 6, wherein a central slot is formed vertically on the nut side of said first seat (7), and wherein said bolt member (5) has on its tip side a corresponding protruding structure to be received in said central slot.

8. Injection nozzle according to one of the claims 1 to 7, wherein said valve casing (16) has four radially extending openings around its circumference, which connect the hollow structure of said valve casing (16) to the outside.

9. Injection nozzle according to one of the claims 1 to 8, wherein said biasing spring (8) is made of a chrome-vanadium alloy.

## Patentansprüche

1. Einspritzdüse für eine Spritzgußmaschine, insbesondere zusammengesetzte Antirückfluß- und Antileckage-Einspritzdüse, mit einer Mutter (2), einem Ventilgehäuse (16) und einer Düsenspitze (11), die zu einem Bauelement zusammengeschraubt sind, wobei das Ventilgehäuse (16), das einen Hohlaufbau hat, eine zusammengedrückte Vorspannfeder (8) aufnimmt, die zur einen Seite hin - der Mutternseite - auf ein Antirückflußventil (4) als erste Dichtstelle und zur gegenüberliegenden Seite hin - der Spitzenseite - auf ein Antileckageventil (10) als zweite Dichtstelle derart wirkt, daß die Bewegung des geschmolzenen Kunststoffs durch die zwei jeweiligen Dichtstellen (3, 12) gesteuert wird.

2. Einspritzdüse nach Anspruch 1, bei der die Mutter (2) in ihrem mutternseitigen Abschnitt einen koaxial ausgebildeten Durchgang (1) aufweist, der sich zur Spitzenseite in eine erste Kammer (15) für geschmolzenes Material erstreckt, und bei der die erste Kammer (15) für geschmolzenes Material auf ihrer Mutternseite einen Ventilsitz (3) aufweist, der die erste Dichtstelle bildet und auf der Spitzenseite in einer zylindrischen koaxialen Bohrung mündet, die ein Gewinde für ein Zusammenwirken mit dem Ventilgehäuse (16) aufweist.

3. Einspritzdüse nach Anspruch 1 oder 2, bei der die in dem Ventilgehäuse (16) angeordnete Vorspannfeder (8) mutternseitig auf einem ersten Sitz (7) aufliegt, der seinerseits auf das Antirückflußventil (4) wirkt, wobei sich das Antirückflußventil (4) gleitend verschiebbar durch eine zentrale Bohrung eines Bolzenelements (5) erstreckt, das in eine Gewindebohrung in dem mutternseitigen Abschnitt des Ventilgehäuses (16) eingeschraubt und fixiert ist, und wobei das Antirückflußventil (4) auf der Mutternseite einen konischen Kopf hat, der zur Bildung der ersten Dichtstelle auf den Ventilsitz (3) wirkt, und wobei das Ventilgehäuse (16) wenigstens ein Durchgangsloch (14) hat, das konzentrisch in der Axialrichtung innerhalb des Ventilgehäuses (16) angeordnet ist.

4. Einspritzdüse nach Anspruch 3, bei der in dem Ventilgehäuse (16) vier Durchgangslöcher (14) vorgesehen sind.

5. Einspritzdüse nach einem der Ansprüche 1 bis 4, bei welcher sich die Vorspannfeder (8) zu der Spitzenseite hin erstreckt und auf einem zweiten Sitz (9) aufliegt, der seinerseits gegen das Antileckageventil (10) drückt, welches sich aus einer in dem spitzenseitigen Abschnitt des Ventilgehäuses (16) angeordneten zentralen Bohrung heraus erstreckt, bei welcher das Antileckageventil (10) ein kegelstumpfförmiges spitzenseitiges Ende bildet, das mit einer Auslaßöffnung (17) der Düsenspitze (11) zusammenwirkt, wobei die Öffnung (17) in ein Einspritzloch (12) führt, und bei welcher zwischen dem Antileckageventil (10) und der Düsenspitze (11) eine zweite Kammer (13) angeordnet ist, in die das Durchgangsloch (die Durchganslöcher) (14) mündet (münden), wobei die Düsenspitze (11) in ein zentrales Gewindeloch in dem mutternseitigen Ende des Ventilgehäuses (16) geschraubt ist.

6. Einspritzdüse nach einem der Ansprüche 1 bis 5, bei der zwischen dem Durchgang (1) der Mutter (2) und der Kammer (15) für geschmolzenes Material eine Filtervorrichtung (18) vorgesehen ist.

7. Einspritzdüse nach einem der Ansprüche 1 bis 6, bei der vertikal auf der Mutternseite des ersten Sitzes (7) ein zentraler Schlitz ausgebildet ist, und bei der das Bolzenelement (5) auf seiner Spitzenseite einen entsprechenden vorspringenden Aufbau für die Aufnahme in dem zentralen Schlitz hat.

8. Einspritzdüse nach einem der Ansprüche 1 bis 7, bei der das Ventilgehäuse (16) um seinen Umfang herum vier sich radial erstreckende Öffnungen aufweist, die den Hohlaufbau des Ventilgehäuses (16) mit der Außenseite verbinden.

9. Einspritzdüse nach einem der Ansprüche 1 bis 8, bei dem die Vorspannfeder (8) aus einer Chromvanadiumlegierung hergestellt ist.

## Revendications

1. Tuyère d'injection pour une machine de moulage par injection, en particulier une tuyère d'injection anti-reflux et anti-fuite, incorporée, comprenant un écrou structural (2), un carter de soupape (16) et un embout de tuyère (11), qui sont vissés ensemble sous forme d'un élément structural, le carter de soupape (16), qui a une structure creuse, contenant un ressort de poussée (8), comprimé, qui agit en direction d'un côté - le côté écrou - sur une soupape anti-reflux (4) en créant un premier point d'étanchéité et en direction du côté opposé - le côté embout - sur une soupape anti-fuite (10) en créant un second point d'étanchéité, de telle sorte qu'un déplacement des matières plastiques fondues soit commandé par les deux points d'étanchéité respectifs (3, 12).

2. Tuyère d'injection selon la revendication 1, dans laquelle ledit écrou (2) comprend un passage (1) formé coaxialement dans sa partie située côté écrou et qui s'étend en direction du côté embout jusque dans une première chambre de matières fondues (15), et dans laquelle ladite première chambre de matières fondues (15) comprend, sur son côté écrou, un carter de soupape (3) formant le premier point d'étanchéité, et débouche dans un trou coaxial cylindrique situé du côté embout, ledit trou étant fileté pour coopérer avec ledit carter de soupape (16).

3. Tuyère d'injection selon la revendication 1 ou 2, dans laquelle le ressort de poussée (8) installé dans ledit carter de soupape (16) s'appuie du côté écrou sur un premier siège (7) qui agit à son tour sur la soupape anti-reflux (4), ladite soupape anti-reflux (4) s'étendant de façon coulissante dans un trou central d'un élément formant broche (5), qui est vissé dans un trou fileté formé dans la partie, situé côté écrou du carter de soupape (16) et qui est fixé, et ladite soupape antireflux (4) comporte du côté écrou une tête conique qui agit sur ledit siège de soupape (3) de façon à former le premier point d'étanchéité, et en ce que ledit carter de soupape (16) comporte au moins un trou traversant (14) disposé concentriquement dans la direction axiale à l'intérieur dudit carter de soupape (16).

4. Tuyère d'injection selon la revendication 3, dans laquelle quatre trous traversants (14) sont formés dans ledit carter de soupape (16).

5. Tuyère d'injection selon une des revendications 1 à 4, dans laquelle ledit ressort de poussée (8) s'étend en direction du côté embout et s'appuie sur un second siège (9), qui exerce à son tour une poussée contre la soupape anti-fuite (10) s'étendant en dehors d'un trou central formé dans la partie, située côté embout, dudit carter de soupape (16), dans laquelle ladite soupape anti-fuite (10) forme l'extrémité tronconique située côté embout, qui coopère avec un orifice de sortie (17) dudit embout de tuyère (11), ledit orifice (17) débouchant dans un trou d'injection (12), et dans laquelle ladite soupape anti-fuite (10) et ledit embout de tuyère (11) une seconde chambre (13) dans laquelle le(s) trou(s) traversant(s) (14) débouche(nt), et ledit embout de tuyère (11) est vissé dans un trou central fileté formé dans l'extrémité, située côté écrou, dudit carter de soupape (16).

6. Tuyère d'injection selon une des revendications 1 à 5, dans laquelle il est prévu un dispositif de filtrage (18) entre ledit passage (1) dudit écrou structural (2) et ladite chambre de matières fondues (15).

7. Tuyère d'injection selon une des revendications 1 à 6, dans laquelle une fente centrale est formée verticalement dans le côté écrou dudit premier siège (7) et dans laquelle ledit élément formant broche (5) comporte sur son côté embout une structure en saillie correspondante destinée à être reçue dans ladite fente centrale.

8. Tuyère d'injection selon une des revendications 1 à 7, dans laquelle ledit carter de soupape (16) comporte autour de sa circonférence, quatre ouvertures s'étendant radialement et reliant la structure creuse dudit carter de soupape (16) avec l'extérieur.

9. Tuyère d'injection selon une des revendications 1 à 8, dans laquelle ledit ressort de poussée (8) est formé d'un alliage chrome-vanadium.
